# EUROPEAN PATENT SPECIFICATION

(11) **EP 1 639 471 B1**
(45) Date of publication and mention of the grant of the patent: **25.05.2011**
(21) Application number: 04756132.9
(22) Date of filing: 24.06.2004
(51) Int. Cl.: G06F 11/34

(54) **WORKLOAD PROFILING IN COMPUTERS**
ARBEITSLAST-PROFILIERUNG IN COMPUTERN
DEFINITION DES PROFILS DE CHARGE DE TRAVAIL POUR ORDINATEURS

(30) Priority: 25.06.2003 US 603223
(43) Date of publication of application: 29.03.2006
(73) Proprietor: UNISYS CORPORATION, Blue Bell, PA 19424-0001 (US)
(72) Inventor: JONES, James, O., Hatfield, PA 19440 (US)
(74) Representative: Vaughan, Christopher Tammo
(86) International application number: PCT/US2004/020486
(87) International publication number: WO 2005/003976

(56) References cited:
- US-A- 4 890 227
- US-A1- 2001 044 705
- US-A1- 2002 178 206

## Description

### BACKGROUND

Allocation and expenditure control for computer resource usage have traditionally been measured with different parameter types. One such parameter now common in the UNIX, LINLTX and Windows Operating System environments measures the application resource allocation to CPU (Central Processing Unit) time through a mechanism generally referred to as "performance monitoring" or "software monitoring". (The environments such as these which run UNIX, LINUX, Windows, and similar operating systems are generally referred to as "commodity" operating system environments since this contrasts them from operating systems that traditionally have run on proprietary hardware, i.e., proprietary operating systems. Examples of proprietary operating systems (OSs) include the IBM 360 and the Unisys OS2200. Until recently, Sun's Solaris operating system which only operated on Sun's proprietary instruction processor chips would also be considered proprietary, but now that it has been modified to operate on Intel processor chip-based computer systems, it probably may be considered a "commodity" operating system also, or perhaps a hybrid OS). An example of software monitoring is found in U.S. Patent No. 6,026,236 issued to Fortin et al. in February of 2000. Software performance monitoring is also described in a different way in U.S. Patent No. 5,485,574 (Bolosky et al) which relies on breakpoints being inserted into the code and using these to catch performance moves. Another example is found in Blaseink, US Patent No. 4,845,615 which is constructed for analyzing software.

In legacy proprietary mainframe operating systems where billing for CPU time was a common metric and each user had an account number, the amount of CPU time per account number was measured and reported. This formed the basis for billing for the use of computer services, i.e., charge backs. Unfortunately, in the modern commodity operating system environment, this metric is not tracked. This failure to enable charge backs, and particularly CPU usage-based charge backs, makes it difficult to exploit commodity OSs for many traditional uses of mainframe computer systems.

Use of this metric had various advantages unavailable to modern computer systems using commodity operating systems. Among the advantages was direct billing for system resource usage. In the 2200 operating system by Unisys other system resources such as I/O usage were also recorded and could be billed for. Contrasted with billing based on performance of an application, this direct resource usage measurement can be thought of by analogy to an odometer reading versus a complex reading of speed and time of driving a car. The odometer, like the resource usage measurement, need only be reviewed at a given point in time to determine accurately how much the car has been driven, while the constant checking of speed and time required for determining the distance a car has traveled will require computational resources as well as constant monitoring. Translating this analogy into the computer world the calculation and monitoring resources are the very resources which could otherwise be providing billable services, thus additionally wasting the very resources one hopes to bill for.

Additionally, by giving a ready indication of which accounts are using how much of a particular resource instead of which applications may be running and for how long, multiple accounts can be using a single application and be readily billed for it.

Further, this "odometer" type metric can be used in diagnostics and load balancing functions, which are particularly important in modern multiprocessor computer systems whether they are with or without multi-partitioned environments. Currently such metrics are not readily available when running computer systems with commodity operating systems.

Furthermore, this "odometer" metric which we call resource profiling, offers insight into system and application characteristics without the benefit of proprietary knowledge of the application's design. Resource profiles are used to model and predict application behaviors for varying system conditions and configurations. Resource profiles are particularly effective in the analysis of heterogonous application mixes. This resource profiling can also be applied to many problems including capacity planning, system health monitoring, and the like. The first application of this technology, however, is to the charge back system which does provide for some assistance in handling server consolidation programs in modern businesses today. Thus, by having a resource profile methodology, a computer system analyst can examine a consolidated server computer having a single partition environment in a way that equitably distributes the charge backs to the departments that host applications on the consolidated server. As the economies of scaling up computer system, servers become more and more apparent, tools such as this will facilitate the process of server consolidation, thus removing many of the objections on the business side to consolidating many smaller servers into one larger one.

Accordingly, finding a convenient way to measure resource usage that is to profile workload in the commodity operating system environment would supply this missing feature to commodity operating systems. Use of this resource profiling should provide improved computing resource utilization, improved and more equitable charge back billing in server consolidation environments, diagnostic capability and load balancing capacity which might be otherwise unavailable for computer systems running commodity operating systems.

If there are proprietary operating systems which provide similar data about CPU, I/O and other resource usage, the profiling we describe herein can also be useful in the context of proprietary operating system.

The most used commodity operating systems currently is the Windows operating system from Microsoft and accordingly application of these principles to the Microsoft operating system environment should be the first environment in which these ideas are played out.

United States patent application publication No. US 2002/178206 discloses computer resource utilization based on a weighting factor that represents a prediction or an estimate of relative duration of use of a given program by individual applications of the different applications in a computer system.

### SUMMARY OF THE INVENTION

In the first use of the resource profile concept, the preferred embodiment relies upon an operating system facility for tracking CPU usage by a mechanism called Windows NT Performance Monitoring API, present in the Windows environment and most commonly known through its well-known client programs Windows Task Manager or System Monitor. Similar mechanisms should be used for other commodity OSs to take advantage of the teachings herein. To establish a profile of an application CPU use, the application being profiled is run under load and a snapshot of the times of CPU use for each of the processes running at that time are recorded. A snapshot capture of this is taken and absolute values are assigned to each of the processes. A baseline system idle state is also maintained for a suitable time period (in the preferred embodiment, the same time period that the program being profiled is run) and a snapshot is taken using the Windows NT Performance Monitoring API to determine which processes are used by the operating system and the computer system during system idle periods. A measurement of absolute value of CPU resource used by each of the processes is taken a first time. Then the snapshot values of the idle phase (time during which the system is idle) are subtracted from the values derived for the active phase (system while the application under test for profiling is being run). By subtracting out the values for the system resource utilization, the true value of the resource utilization for the application is then determined. All of this profiled application's processes are then known from the Performance Monitoring API together with how much of them is used in proportion to the other resources used by the application while that application is active.

Experimentally we have determined that resource utilization for any tested specific application configuration tends to remain uniform regardless of the amount or intensity or user load affecting the resource utilization. The proportions of resource utilization as the program takes on more and more users tend to remain the same, given the same computer system physical configuration and application configuration. By application configuration it is meant that the set of behaviours or processes required by the application remain essentially the same. For example, if a Microsoft Exchange application is serving inter-company LAN versus internet requests, or if an anti-virus option is turned on, the mix of processes used under load will vary with either of these changes in configuration. Thus, once we obtain a profile of resource utilization for a program, in a given workload configuration, we can extrapolate unmetered CPU usage for that particular application from its metered processes.

Therefore, when applying this to billing or charge backs, the application's billing factor is derived from its profile. A profile's billing factor is equal to the sum of the percentages (or proportions) of those processes that can be explicitly metered (as revealed by the profiling). Then this billing factor is used to increase the CPU billing rate for a particular application in order to compensate for CPU usage of the unmetered processes. Thus, we take the billing rate divided by the billing factor to get the billing rate for CPU unit of time. This same arithmetic can be applied to other resources that are similarly metered and used in other operating systems which have similar metering capacity.

Further, this inventive arithmetic process for establishing a profile and then basing decisions on usage, charge backs, allocation of resources, maintenance, or the like is not required for some legacy proprietary operating systems. Many of such systems may do their own metering as they enable the direct metering of accounts and their actual CPU usage as part of their original function. With legacy charge back systems, one does not have to set up a profile and extrapolate process use from a profile which has been subtracted from idle system use in order to determine what the actual use is (as we teach here). Instead, with some legacy systems the actual usage is recorded and reported directly. It is the failure of modern commodity OSs to have this feature (as well as the need present in some proprietary OSs which do not have this feature) that requires this invention. Further, in some legacy systems where the data supplied by the OS facilities does cover application usage of CPU or other resource usage, it will still be useful to provide application profiles for usage of the resources for many reasons having to do with system health monitoring, resource allocation, performance and cost management.

The aim and objects of this invention are achieved by the methods and systems according to independent claim 1 and any other independent claims of this invention. Further details may be found in the remaining dependent claims.

### BRIEF DESCRIPTION OF THE DRAWINGS

Fig. 1 is a pie chart of CPU utilization.
Fig, 2 is an image of a screen shot of a Windows task manager.
Fig. 3A and Fig. 3B are partial snapshot captures of all the CPU utilization by processes on a computer system in two modes. Fig. 3A shows the system in idle mode and Fig. 3B shows the system with "commerce server" under a workload of 200 users.
Figs. 4A - C are pie charts of resource utilization in the COMMERCE SERVER with 200 users, the CPU idle system, and the CPU idle minus COMMERCE SERVER profile system, respectively.
Fig. 5 is a pie chart similar to Fig. 4C.
Figs. 6, 7, and 8 are pie chart CPU profile examples of three different applications.
Fig. 9 is a graph illustrating CPU versus I/O utilization.
Fig. 10 is a heuristic block diagram of a use of a preferred embodiment.

### DETAILED DESCRIPTION OF THE PREFERRED EMBODIMENTS

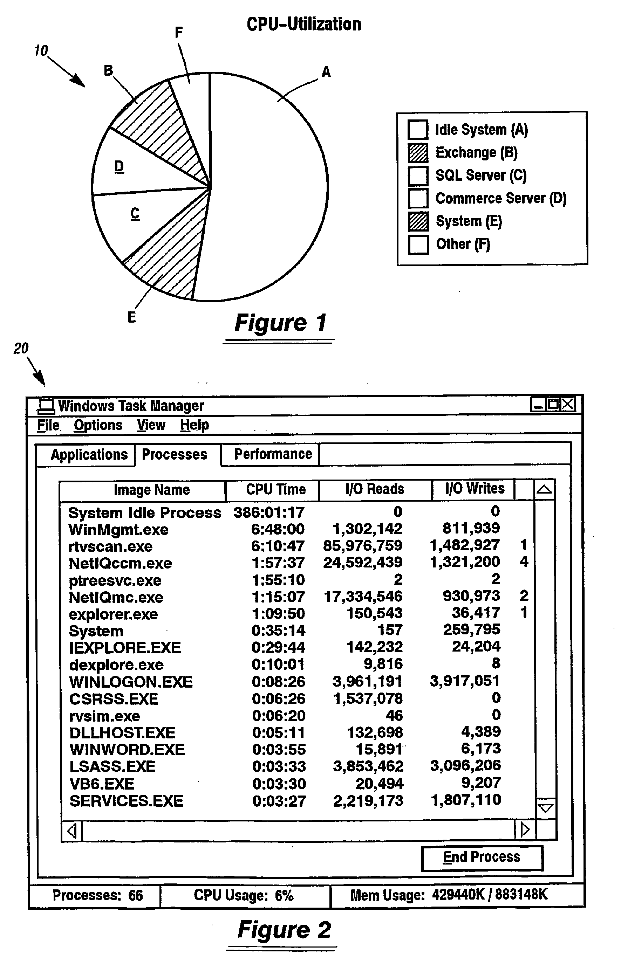

Thus, we should start by looking at what the processes usage is. Refer first to Fig. 1, in which the process idle system A takes up most of the CPU time. The EXCHANGE application B and the SYSTEM RESOURCE application E take up similar amounts of time as do the COMMERCE SERVER and SQLSERVR, D and C, respectively. A lot of other smaller processes are aggregated into section F of the pie chart 10 which show substantially smaller CPU. utilization even when added together.

Application programs are composted of many "processes," "threads," or "active components." These sub-program level processes use of CPU time, Input/Output (I/O) reads, and I/Owrites are captured in the Windows operating system performance monitoring API mentioned above. In Fig. 2, a typical display from an ordinary Windows 2000 operating system, Windows Task Manager 20 is shown. Not all of the processes are displayed As can be seen from the indicator at the bottom that there are 66 processes running and only 18 are visible in the window.

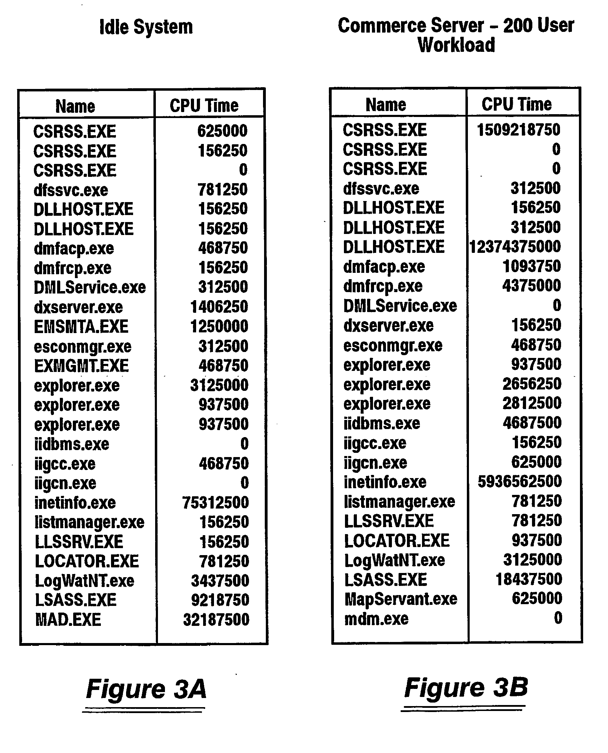

A baseline sampling of all the processes running on an idle system are listed in Fig. 3A showing the kernel and user mode time, corresponding to CPU usage for each process. In Fig. 3B, a similar list is shown, also taken from the task manager, showing all the processes running and the kernel mode time for a 200 user workload of the COMMERCE SERVER program.

The list of all the processes and all of their resource use in the preferred embodiment CPU time or "kernel mode" and "user mode" time are captured in the snapshot taken after the startup of an identical system in idle state for Fig. 3A and running COMMERCE SERVER with 200 user workload in Fig. 3B. The snapshot from Fig. 3A then subtracted from, the snapshot from Fig. 3B gives us an application resource profile of processes that are active when the COMMERCE SERVER is running with a 200 user load.

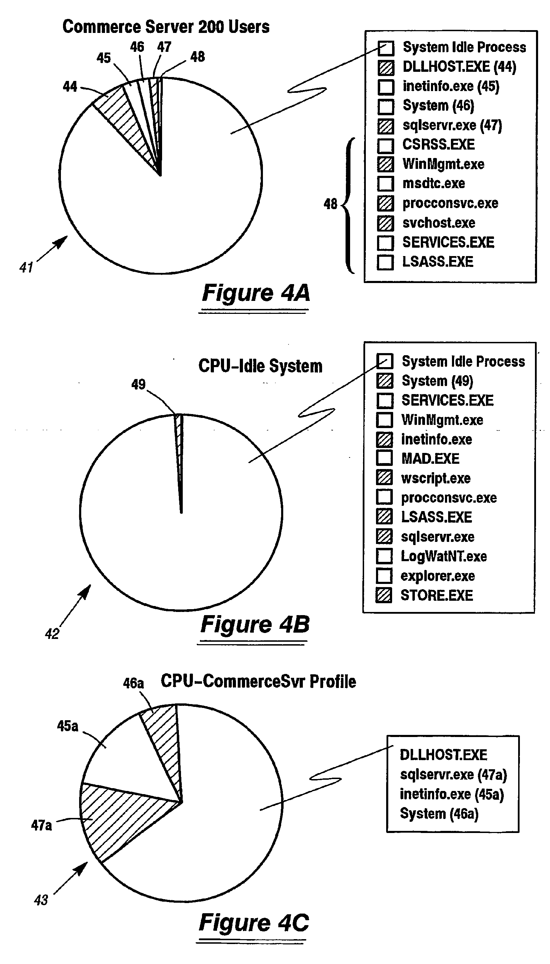

Since there may be other ways to perform this calculation arithmetically, the illustrations of Fig. 4A - C illustrate the concept in general terms. The pie chart 41 of Fig. 4A shows the proportional usage of CPU or other resource time (in this case CPU time), taken by particular processes used in the COMMERCE SERVER application program with 200 users workload. The system idle process as usual is represented by the largest proportion of the available space on the pie chart 41. The wedge of pie chart devoted to the DLLHOST.EXE process 44 is next largest. Next is the INETINFO.EXE wedge 45, following which is SYSTEM RESOURCES 46 and SQLSERVR.EXE 47. The remaining processes are combined into the final wedge 48. Snapshot B is of the CPU idle system. The CPU resource is mostly engaged in the system idle process again in pie chart 42 of Fig. 4B. However, of course, this system idle process takes up nearly all of the CPU time in the idle system. Statistics or housekeeping activities that may be required by the computer system to maintain systems processes or sustain basic processes show up as a very small wedge 49.

The subtracted result produces a COMMERCE SERVER profile pie chart 43 of Fig. 4C, having specific proportionate pie wedges for the DLLHOST.EXE, sqlservr.exe 47a, inetinfo.exe 45a and System 46a as components of its profile

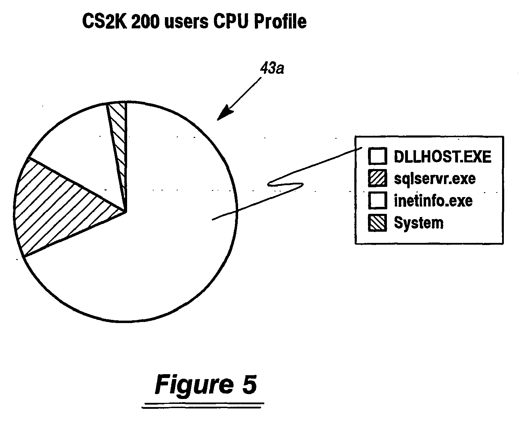

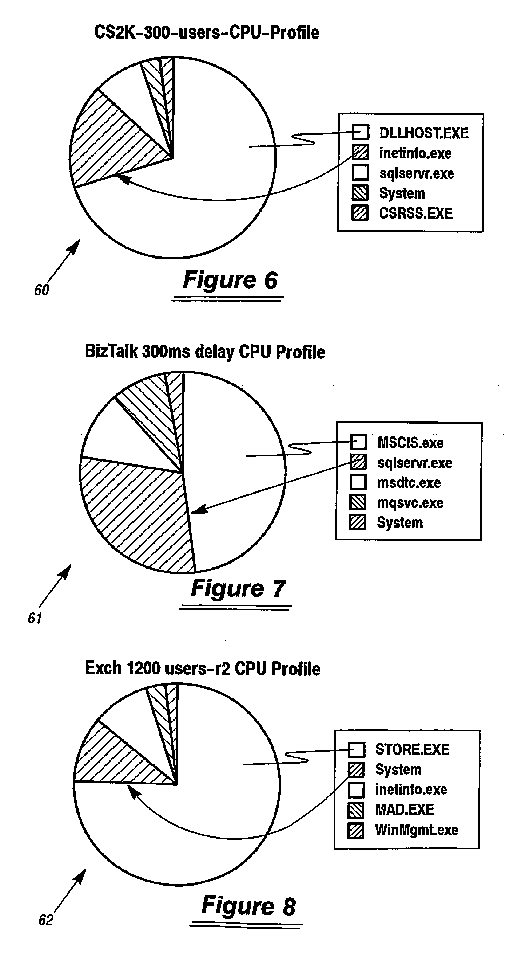

In Fig. 5, the COMMERCE SERVER profile of resource usage in pie chart 43A is shown. Here the largest proportion of resources used by the COMMERCE SERVER program is the DLLHOST.EXE, the second largest is the SQLSERVR.EXE, the third largest is the INETINFO.EXE, and finally some system resources are also used by the commerce server. As we have seen experimentally, the same CPU usage profile will be obtained when running the COMMERCE SERVER application even if there are different numbers of users. Accordingly, the pie chart 60 of Fig. 6 is identical to the pie chart 43A of Fig. 5. The program BizTalk establishes a different profile illustrated as pie chart 61 of Fig. 7. In Fig. 8 the pie chart 62 again is different showing different resource utilization by different processes in the CPU profile for the EXCHANGE program as having been used at a workload level of 1200 users.

It has been found that profiles and billing factors appear to remain constant as user load increases regardless of the program being profiled. Thus, we have a fair amount of confidence that the scalability of the profiles will be consistent across program loads and for many different programs, so long as the configuration of the system and the nature of the work being done remain constant.

The CPU configurations for different types of computers does seem to affect the profiles. Therefore it is important to establish the profiles on computer system configurations on which the program's profile will be used to support a charge back or other service this invention can provide.

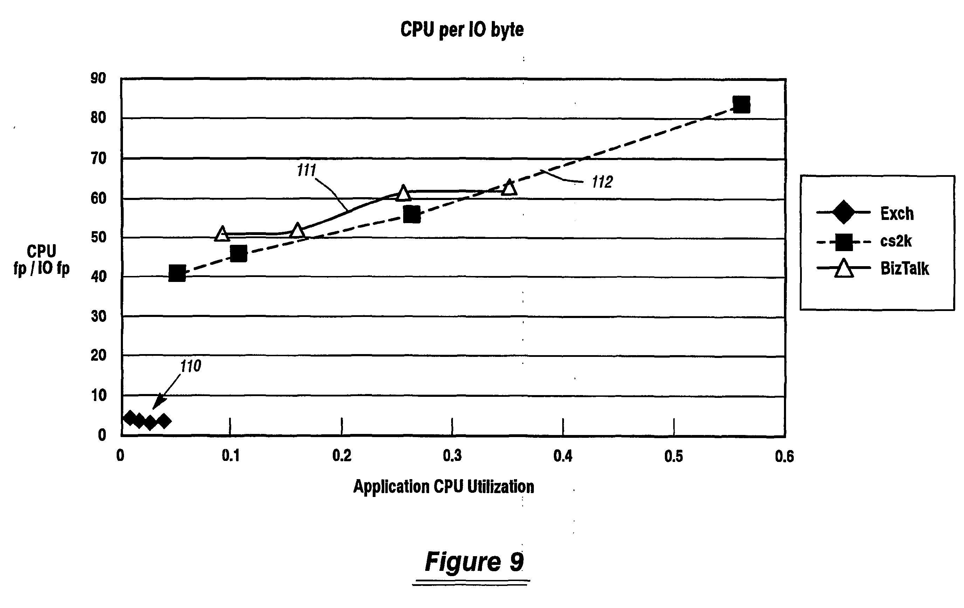

Fig. 9 illustrates CPU utilization versus I/O utilization, characterized as CPU per byte of I/O. Note that the chart for Microsoft Exchange has very little CPU utilization at all and a very low number for CPU usage/I/O usage ratio, probably because it is mainly a data-serving program. BizTalk 111 and Commerce Server 2000 (112) both show relatively high CPU utilization, and a similar CPU/I/O usage ratio. When setting up server computer systems and the like, one should benefit from knowing whether a particular application is compute or I/O bound, and the use of these application profiles can provide this valuable information. Further, by doing profiling on multiple system configuration designs, one can tune the system prior to customer usage using the profiles of the applications the customer will want to use on his system.

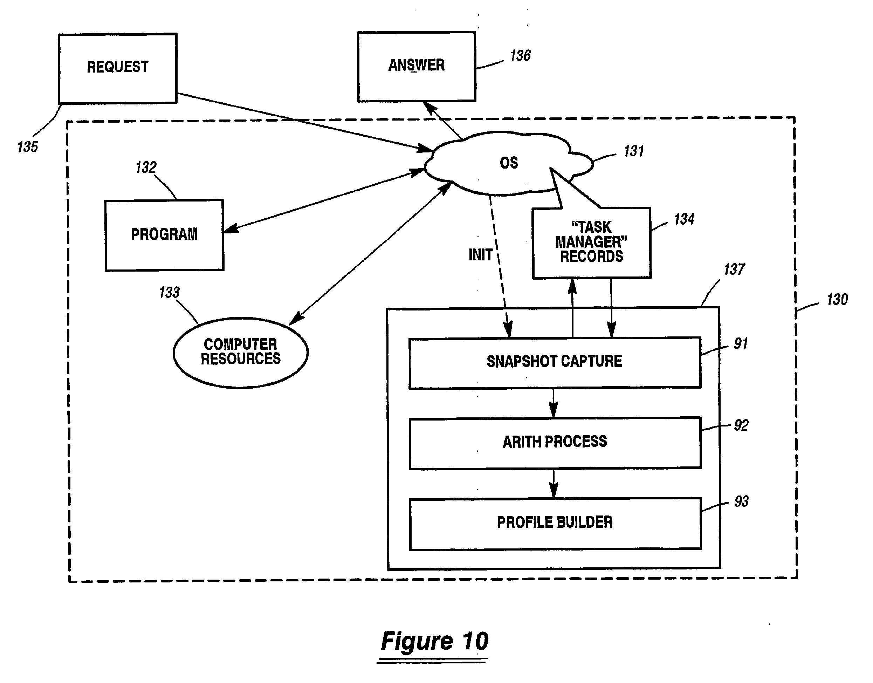

Refer now to Fig. 10 in which the computer system 130 is shown in heuristic detail. An operating system 131 controls the use of the computer resources 133 by various programs and processes within the computer system and its memory. Program 132 may be an example program being profiled in accord with a preferred embodiment of the invention. When the program 132 is running, OS 131 will generate calls to the various processes required to run program 132 utilizing computer resources 133. The operating system 131 as part of its native functionality will keep a record 134 of the use of the computer resources by the various processes (not shown) spawned by the program 132 during its operation. These records are kept in the Windows operating system environment in a program we refer to here for convenience as the Performance Monitoring Service 134. (This function has several commonly known client programs, for example, Task Manager is really just a client program of what is currently called the Windows NT Performance Monitoring API, although at a future date they could both be called by other names. Generally we are referring to an OS service which records usage data for running processes, and makes these statistics available to client programs like the Performance Monitoring Service. In Windows, Task Manager reveals information about processes and their resources consumption, however, the service that Performance Monitoring Service performs also exposes other resource usage information not specifically linked with processes such as network activity and storage (disk) usage. There are potentially numerous other uses for such information besides the ones specifically revealed here. In other OSs these Performance Monitoring Services may be called by various names. Therefore we use the common name Performance Monitoring Service to refer to a program that gathers the usage data from the OS service that notes the usage data.) Similar facilities may be found in other commodity operating systems and be appropriately substituted when desirable. Basically, these monitoring services should track the activities of "objects" and note their resource usage. The objects can be processes, processors, servers, or any objects the OS can back When a request is made 135 to profile program 32, the signal (INIT) is sent through operating system 131 to the inventive program 137. The first step in the process of 137 is to capture snapshots of the program 132's use of the computer resources 133 by reading the records in the task manager 134. In this diagram this phase is characterized by block 91 snapshot capture.

Note that various uses of this information may be better served by attending to use of specific resource types. Data from specific resource usage (CPU vs. I/O reads or writes) can reveal important information about the program, including load balancing and resource allocation to programs and the like. It will be advantageous of course to be able to separately identify CPU. and I/O usage as individually identifiable resource items in some instances, and not in others. For example, if the profile will be used to allocate how much I/O a program will be getting in a computer system, based on priorities and the like, knowing the I/O to CPU usage ratio for all programs expected to be sharing a given computer system.

The next block arithmetic process 92 will be supplied with a snapshots capture data set similar to the one illustrated in Fig. 2, for the computer system 130 at idle state, and for the computer system 130 with program 132 running under load. The idle state measurement can be taken either through program 137 initiating a halt to the operating system and its functions and setting the computer system to idle and measuring the idle state at an appropriate time so that the total time elapsed in the task manager records for the idle state is equal to the measurement taken in the snapshot for the program 132 running. The arithmetic processes then described previously herein will subtract the values of the idle process records in the task manager snapshot from the idle processing time from the program processing records in the task manager taken in the previous snapshot from when the program 132 was running under load. From these values, a profile for program 132 will be built in profile builder 93. This profile then will be returned through the operating system 131 to provide an answer 136 to the entity who made the request 135.

Alternatively, one can use non-idle systems as the baseline snapshot also. Therefore, even though an idle-state snapshot as the baseline reference is preferable and less problematic; it is not mandatory. We have successfully generated some profiles using a non-idle system as the baseline snapshot. For example, if two snapshots A and B primarily differ only by the target application's workload, then an acceptable profile can be generated. In this case, one might want to repeat the process several times and compare a set of profiles to convince one's self that the background application workload (for the baseline snapshot) was reasonably uniform for the two snapshots.

Deriving the billing factor for a program is accomplished from using its profile. For example, a profile's billing factor in the preferred embodiment is the sum of the percentages of those processes that can be explicitly metered as revealed by the profiler. For example, COMMERCE SERVER billing factor is 0.68 plus 15 equals .83. The .68 is the 68% DLLHOST usage. The 15% is the SQLSERVR measurement. Note that there are also usage numbers of 14% for INETINFO and 3% SYSTEM, which are not considered part of the billing factor for commerce server because we can't explicitly meter them. Accordingly, this billing factor is used to increase the CPU billing rate for COMMERCE SERVER to compensate for CPU usage of the un-metered processes. For example, instead of charging $1 per CPU minute, we charged the user of COMMERCE SERVER a $1.20 per CPU minute. This is done because the adjusted billing rate equals the standard CPU billing rate divided by the billing factor. COMMERCE SERVER billing rate therefore is $1 per CPU minute divided by 83% or .83 which equals $1.20 per CPU minute. Thus, by combining the billing factor with any measure of resource usage, the customer can be accurately billed based upon the billing factor for the application program the customer is using and the amount of measured units the resource is used.

Just to reiterate and clarify this point, the amount of resource usage is, in the preferred embodiment, captured by capturing output available from the performance monitor API in the Windows environment or by using substantially equivalent data available from other operating system facilities. Combining this number with the billing factor gives the amount of charge back.

At the present time it is clear that use of workload profiles of applications can have numerous uses other than charge backs and billing. For example, if a profile is taken on a regular basis for usage of an application program on a given system, and that profile changes, this would be a clear indication of a change in the status of some feature of the computer system, since workload has been seen not to affect the profile, it must be a change in the way the system is functioning. Thus, a change in profile could be a signal added into a system health monitoring program which may trigger a signal to a repair program or person to look into a potential problem, possibly to make prophylactic repair. Likewise, such changes may signal a security problem or signal intruder detection, and so it would be appropriate for a security monitoring program or person to be appraised of such changes. Even simpler, information about a single new process being revealed by noticing a change in processes used rather than a significant shift in a profile (given the same workload configuration) will suggest to the security expert that further investigation is warranted to determine if there has been a security breach. Further, in setting up a computer system, knowing the workload profiles of application programs, or even of their profiles regarding I/O versus CPU usage will help set up the most efficient system design for the specific applications a user or business may want. Also, on an ongoing basis, load balancing may be accomplished if the OS system itself responds to changes in profile by looking for overburdened resources and reallocating less used resources to bottle-necked tasks. Especially in multiprocessor and multi-partitioned computer systems this use may become quite important in improving the economics of computer resource usage.

There are many other ways that the program profile data can be used but the scope of this invention is only limited with reference to the following claims.

## Claims

1. A computer system (130) having an application workload profiling capability comprising:
an operating system (131) facility for tracking resource usage by objects using said resource in said computer system (130) and making a data record (134) of said tracking,
a snapshot capture program (132) for capturing said usage tracking data for all said objects running during a functional operation of said computer system (130), wherein said snapshot capture program (132) captures a first snapshot capture file that includes usage tracking data in an active phase for all objects using resources during use of a program (132) to be profiled while under load and **characterized in that** said snapshot capture program (132) is also for capturing a second snapshot capture file of usage tracking data for objects using resources during an active phase for all objects using resources during a second condition of said computer system (130), and by
an arithmetic process (92) for subtracting said second snapshot capture file from said first snapshot capture file.

2. The computer system (130) of claim 1 wherein said second condition is an idle condition.

3. A computer program (132) as set forth in claim 1 wherein said first condition is also running a second applications program (132) and said second condition is only running said second application program (132).

4. The computer system (130) of claim 1 wherein said computer system (130) further comprises a client facility for recording said data record (134) of said usage tracking into a record file.

5. The computer system (130) of claim 1 wherein said snapshot capture program (132) captures said first and second snapshot using substantially identical amounts of time during functional operation for said snapshot.

6. The computer system (130) of claim 1 wherein said resource usage object is CPU processing.

7. The computer system (130) of claim 1 wherein said resource usage object is I/O handling.

8. The computer system (130) of claim 1 wherein said resource usage object is a plurality of objects and usage tracking data for each of said plurality is identifiable.

9. The computer system (130) of claim 1 wherein said resource usage object is all processes whose resource usage is tracked by an operating system (131) function.

10. The computer system (130) of claim 1 further comprising means for revealing primary processes used in active phase and an amount of resource used by said primary resources by said application program (132) and means for producing a report having a resource usage profile for said application program (132) from said revealed data.

11. The computer system (130) of claim 10 having a billing program (132) that uses data from said resource usage profile for said application program (132) to identify charge backs for usage of said application program (132) billing.

12. The computer system (130) of claim 10 wherein a billing factor is created from said resource usage profile for said application program (132), and said billing factor is applied to a total amount of resource usage by a billing program (132) to generate charge backs to users of said application program (132).

13. A computer program (132) having an application workload profiling capability for use with a commodity operating system (131) wherein said operating system (131) has an operating system (131) facility for tracking resource usage of said resource in said computer system (130) and making a data record (134) of said tracking, comprising:
a snapshot capture program (132) for capturing said usage tracking data for all said processes running during a functional operation of said computer system (130), wherein said snapshot capture program (132) captures a first snapshot capture file that includes usage tracking data in an active phase for all processes running during use of a program (132) to be profiled under load and **characterized in that** said snapshot capture program (132) also captures a second snapshot capture file of usage tracking data for processes running during an active phase of said computer system (130) in a different condition, and by
an arithmetic mechanism for subtracting said second snapshot capture file from said first snapshot capture file.

14. A computer program (132) as set forth in claim 13 wherein said second condition is an idle condition.

15. A computer program (132) as set forth in claim 13 wherein said first condition is also running a second applications program (132) and said second condition is only running said second applications program (132).

16. A computer program as set forth in claim 13 **characterized in that** the computer program is stored in a computer readable medium.

17. A method of applications program workload profiling comprising:
obtaining a data record (134) of object usage from an operating system (131) facility for tracking resource usage by each object using said resource in said computer system (130) and making a data record (134) of said tracking, said obtaining capturing:
a first snapshot of usage data for all said objects running during a functional active phase operation of said computer system (130) by said applications program (132), and **characterized by** a second snapshot of usage data for all said objects running during a functional idle phase of said computer system (130), and by
comparing said idle phase second snapshot from said idle phase to said active phase first snapshot of said active phase to reveal which of said objects are using said resource while in said active phase.

18. The method of claim 17 wherein said idle phase snapshot and said active phase snapshot are of equal duration.

19. The method of claim 17 where said revealed objects using said resource in said active phase are identified by proportionate value of resource usage.

20. The method of claim 19 wherein said proportionate value of resource useage is used to establish a billing factor.

21. The method of claim 20 wherein proportionate value of resource usage by said applications program (132) is used to establish a baseline workload profile for said applications program (132).

22. The method of claim 21 wherein said baseline workload profile is compared to a monitored workload profile in a commercially used system to determine if a change is occurring to said profile.

23. The method of claim 22 wherein if a change is occurring in said workload profile, a message is sent to an entity responsible for said computer system (130).

24. The method of claim 20 wherein said resource usage object is CPU processing.

25. The method of claim 20 wherein said resource usage object is I/O handling.

26. The method of claim 20 wherein said resource usage object is a plurality of objects and usage tracking data for each of said plurality is identifiable.

27. The method of claim 18 wherein said resource usage object is all processes whose resource usage is tracked by an operating system (131) function.

28. The method of claim 17 comprising;
a second applications program (132), and a second snapshot of usage data for all said each objects running during a functional active phase of said computer system (130) by a second applications program (132), and
comparing said functional active phase second snapshot to said functional active phase first snapshot to reveal which of said objects are using said resource while in said active phase.

## Patentansprüche

1. Computersystem (130) mit einer Fähigkeit zur Profilierung der Arbeitslast von Anwendungen, welches aufweist:
eine Einrichtung eines Betriebssystems (131) zum Verfolgen der Ressourcenverwendung durch Objekte, welche die Ressource in dem Computersystem (130) verwenden, und zur Erstellung eines Datensatzes (134) der Verfolgung,
ein Schnappschusserfassungsprogramm (132) zum Erfassen der Verwendungsverfolgungsdaten für alle während einer Funktionsoperation des Computersystems (130) laufenden Objekte, wobei das Schnappschusserfassungsprogramm (132) eine erste Schnappschusserfassungsdatei erfasst, welche Verwendungsverfolgungsdaten in einer aktiven Phase für alle Objekte enthält, die während der Verwendung eines zu profilierenden Programms (132) unter Last Ressourcen verwenden, **dadurch gekennzeichnet, dass** das Schnappschusserfassungsprogramm (132) auch dazu dient, eine zweite Schnappschusserfassungsdatei von Verwendungsverfolgungsdaten für Objekte, die während einer aktiven Phase Ressourcen verwenden, für alle Objekte, die während eines zweiten Zustands des Computersystems (130) Ressourcen verwenden, zu erfassen, und durch
einen arithmetischen Prozess (92) zum Subtrahieren der zweiten Schnappschusserfassungsdatei von der ersten Schnappschusserfassungsdatei.

2. Computersystem (130) nach Anspruch 1, wobei der zweite Zustand ein Ruhezustand ist.

3. Computerprogramm (132) nach Anspruch 1, wobei der erste Zustand auch ein zweites Anwendungsprogramm (132) ausführt und der zweite Zustand nur das zweite Anwendungsprogramm (132) ausführt.

4. Computersystem (130) nach Anspruch 1, wobei das Computersystem (130) ferner eine Client-Einrichtung zum Aufzeichnen des Datensatzes (134) der Verwendungsverfolgung in einer Aufzeichnungsdatei aufweist.

5. Computersystem (130) nach Anspruch 1, wobei das Schnappschusserfassungsprogramm (132) den ersten und den zweiten Schnappschuss unter Verwendung im Wesentlichen identischer Zeitdauern während der Funktionsoperation für den Schnappschuss erfasst.

6. Computersystem (130) nach Anspruch 1, wobei das Ressourcenverwendungsobjekt die CPU-Verarbeitung ist.

7. Computersystem (130) nach Anspruch 1, wobei das Ressourcenverwendungsobjekt E/A-Handling ist.

8. Computersystem (130) nach Anspruch 1, wobei das Ressourcenverwendungsobjekt aus einer Mehrzahl von Objekten besteht und Verwendungsverfolgungsdaten für jedes der Mehrzahl identifizierbar sind.

9. Computersystem (130) nach Anspruch 1, wobei das Ressourcenverwendungsobjekt aus allen Prozessen besteht, deren Ressourcenverwendung durch eine Funktion des Betriebssystems (131) verfolgt wird.

10. Computersystem (130) nach Anspruch 1, welches ferner aufweist: Mittel zum Offenlegen primärer Prozesse, die in einer aktiven Phase verwendet werden, und einer von den primären Ressourcen verwendeten Ressourcenmenge durch das Anwendungsprogramm (132) und Mittel zum Erzeugen eines Berichts mit einem Ressourcenverwendungsprofil für das Anwendungsprogramm (132) aus den offengelegten Daten.

11. Computersystem (130) nach Anspruch 10 mit einem Abrechnungsprogramm (132), das Daten von dem Ressourcenverwendungsprofil für das Anwendungsprogramm (132) verwendet, um Rückerstattungen für die Verwendung der Abrechnung für das Abrechnungsprogramm (132) zu identifizieren.

12. Computersystem (130) nach Anspruch 10, wobei ein Abrechnungsfaktor aus dem Ressourcenverwendungsprofil für das Anwendungsprogramm (132) erzeugt wird und der Abrechnungsfaktor auf den Gesamtbetrag der Ressourcenverwendung durch ein Abrechnungsprogramm (132) angewendet wird, um Rückerstattungen für Benutzer des Anwendungsprogramms (132) zu erzeugen.

13. Computerprogramm (132) mit einer Fähigkeit zur Profilierung der Arbeitslast von Anwendungen zur Verwendung mit einem Commodity-Betriebssystem (131), wobei das Betriebssystem (131) eine Einrichtung zum Verfolgen der Ressourcenverwendung der Ressource in dem Computersystem (130) und zur Erstellung eines Datensatzes (134) der Verfolgung aufweist, welches umfasst:
ein Schnappschusserfassungsprogramm (132) zum Erfassen der Verwendungsverfolgungsdaten für alle während einer Funktionsoperation des Computersystems (130) laufenden Prozesse, wobei das Schnappschusserfassungsprogramm (132) eine erste Schnappschusserfassungsdatei erfasst, welche Verwendungsverfolgungsdaten in einer aktiven Phase für alle Prozesse, die während der Verwendung eines zu profilierenden Programms (132) unter Last Ressourcen verwenden, enthält, **dadurch gekennzeichnet, dass** das Schnappschusserfassungsprogramm (132) auch eine zweite Schnappschusserfassungsdatei von Verwendungsverfolgungsdaten für Prozesse erfasst, die während einer aktiven Phase des Computersystems (130) in einem anderen Zustand laufen, und durch
einen arithmetischen Mechanismus zum Subtrahieren der zweiten Schnappschusserfassungsdatei von der ersten Schnappschusserfassungsdatei.

14. Computerprogramm (132) nach Anspruch 13, wobei der zweite Zustand ein Ruhezustand ist.

15. Computerprogramm (132) nach Anspruch 13, wobei der erste Zustand auch ein zweites Anwendungsprogramm (132) ausführt und der zweite Zustand nur das zweite Anwendungsprogramm (132) ausführt.

16. Computerprogramm nach Anspruch 13, **dadurch gekennzeichnet, dass** es in einem computerlesbaren Medium gespeichert ist.

17. Verfahren zum Profilieren der Arbeitslast eines Anwendungsprogramms, welches folgenden Schritt aufweist:
Erhalten eines Datensatzes (134) der Objektverwendung von einer Einrichtung eines Betriebssystems (131) zum Verfolgen der Ressourcenverwendung jedes Objekts, welches die Ressource in dem Computersystem (130) verwendet, und zur Erstellung eines Datensatzes (134) der Verfolgung, wobei beim Erhalten erfasst wird:
ein erster Schnappschuss von Verwendungsdaten für alle Objekte, die während einer Operation einer funktional aktiven Phase des Computersystems (130) von dem Anwendungsprogramm (132) ausgeführt werden, **gekennzeichnet durch** einen zweiten Schnappschuss von Verwendungsdaten für alle Objekte, die während einer funktionalen Ruhephase des Computersystems (130) ausgeführt werden, und **durch**
Vergleichen des zweiten Schnappschusses der Ruhephase mit dem ersten Schnappschuss der aktiven Phase, um offenzulegen, welche der Objekte die Ressource in der aktiven Phase verwenden.

18. Verfahren nach Anspruch 17, wobei der Schnappschuss der Ruhephase und der Schnappschuss der aktiven Phase die gleiche Dauer aufweisen.

19. Verfahren nach Anspruch 17, wobei die offengelegten Objekte, welche die Ressource in der aktiven Phase verwenden, durch einen proportionalen Wert der Ressourcenverwendung identifiziert werden.

20. Verfahren nach Anspruch 19, wobei der proportionale Wert der Ressourcenverwendung zur Festlegung eines Abrechnungsfaktors verwendet wird.

21. Verfahren nach Anspruch 20, wobei der proportionale Wert der Ressourcenverwendung durch das Anwendungsprogramm (132) verwendet wird, um ein Grundlinien-Arbeitslastprofil für das Anwendungsprogramm (132) festzulegen.

22. Verfahren nach Anspruch 21, wobei das Grundlinien-Arbeitslastprofil mit einem überwachten Arbeitslastprofil in einem kommerziell verwendeten System verglichen wird, um festzustellen, ob eine Änderung des Profils auftritt.

23. Verfahren nach Anspruch 22, wobei eine Nachricht zu einer für das Computersystem (130) verantwortlichen Einrichtung gesendet wird, falls eine Änderung in dem Arbeitslastprofil auftritt.

24. Verfahren nach Anspruch 20, wobei das Ressourcenverwendungsobjekt die CPU-Verarbeitung ist.

25. Verfahren nach Anspruch 20, wobei das Ressourcenverwendungsobjekt E/A-Handling ist.

26. Verfahren nach Anspruch 20, wobei das Ressourcenverwendungsobjekt aus einer Mehrzahl von Objekten besteht und Verwendungsverfolgungsdaten für jedes der Mehrzahl identifizierbar sind.

27. Verfahren nach Anspruch 18, wobei das Ressourcenverwendungsobjekt aus allen Prozessen besteht, deren Ressourcenverwendung durch eine Funktion des Betriebssystems (131) verfolgt wird.

28. Verfahren nach Anspruch 17, welches aufweist:
ein zweites Anwendungsprogramm (132) und einen zweiten Schnappschuss von Verwendungsdaten für alle Objekte, die während einer funktional aktiven Phase des Computersystems (130) durch ein zweites Anwendungsprogramm (132) ausgeführt werden, und
Vergleichen des zweiten Schnappschusses der funktional aktiven Phase mit dem ersten Schnappschuss der funktional aktiven Phase, um offenzulegen, welche der Objekte die Ressource in der aktiven Phase verwenden.

## Revendications

1. Système d'ordinateur (130) ayant une application apte au profilage de charge de travail comprenant :
- un système opérationnel (131) pour garder trace de l'utilisation de ressource par des objets utilisant ladite ressource dans ledit système d'ordinateur (130) et réaliser un enregistrement de données (134) de ladite trace.
- Un programme de prise d'instantanés (132) pour saisir ladite donnée de trace d'utilisation pour tous lesdits objets fonctionnant durant une opération fonctionnelle dudit système d'ordinateur (130) tandis que ledit programme de saisi d'instantanés (132) saisit un premier fichier de saisie d'instantanés qui inclut la donnée de trace d'utilisation dans une phase active pour tous les objets utilisant des ressources lors de l'utilisation d'un programme (132) destiné à être profilé tout en étant soumis à charge de travail, **caractérisé en ce que** ledit programme de saisie d'instantanés (132) est également destiné à saisir un second fichier de saisie d'instantanés de la donnée de trace d'utilisation pour des objets utilisant les ressources lors d'une phase active pour tous les objets utilisant les ressources lors d'une seconde condition dudit système d'ordinateur (130), et **caractérisé par**
- Un processus arithmétique (92) pour la soustraction dudit second fichier de saisie d'instantanés depuis ledit premier fichier de saisie d'instantanés.

2. Système d'ordinateur selon la revendication 1, **caractérisé en ce que** la seconde condition est une condition de veille.

3. Système d'ordinateur selon la revendication 1, **caractérisé en ce que** ladite première condition correspond au fonctionnement d'un second programme d'applications (132) et ladite seconde condition correspond seulement au fonctionnement dudit second programme d'applications (132).

4. Système d'ordinateur selon la revendication 1, **caractérisé en ce qu'**il comporte en outre une installation de clients pour enregistrer ledit enregistrement de données (134) de ladite trace d'utilisation dans un fichier d'enregistrement.

5. Système d'ordinateur selon la revendication 1, **caractérisé en ce que** ledit programme de saisie d'instantanés (132) saisit lesdits second et premier instantanés en utilisant des durées de temps sensiblement identiques lors de l'opération fonctionnelle, pour ledit instantané.

6. Système d'ordinateur selon la revendication 1, **caractérisé en ce que** ledit objet d'utilisation de ressources est un processus CPU.

7. Système d'ordinateur selon la revendication 1, **caractérisé en ce que** ledit objet d'utilisation de ressources est le traitement I/O.

8. Système d'ordinateur selon la revendication 1, **caractérisé en ce que** ledit objet d'utilisation de ressources est une pluralité d'objets, et **en ce que** la donnée de trace d'utilisation pour chacune de ladite pluralité est identifiable.

9. Système d'ordinateur selon la revendication 1, **caractérisé en ce que** ledit objet d'utilisation de ressources est constitué de tous les processus dont l'utilisation de ressources est tracé par une fonction de système opérationnel (131).

10. Système d'ordinateur selon la revendication 1, **caractérisé en ce qu'**il comporte en outre des moyens pour révéler des processus primaires utilisés en phase active et une quantité de ressources utilisées par lesdites ressources primaires par ledit programme d'applications (132), et des moyens pour produire un rapport ayant un profil d'utilisation de ressources pour ledit programme d'applications (132), à partir de ladite donnée révélée.

11. Système d'ordinateur selon la revendication 10, **caractérisé en ce qu'**il présente un programme de facturation (132) qui utilise des données provenant dudit profil d'utilisation de ressources afin que ledit programme d'applications (132) puisse identifier les refacturations pour l'utilisation de la facturation dudit programme d'applications (132).

12. Système d'ordinateur selon la revendication 10, **caractérisé en ce qu'**un facteur de facturation est engendré à partir dudit profil d'utilisation de ressources pour ledit programme d'applications (132), et ledit facteur de facturation est appliqué à une quantité totale d'utilisation de ressources par un programme de facturation (132) pour engendrer des refacturations aux utilisateurs dudit programme d'applications (132).

13. Programme d'ordinateur (132) ayant une aptitude au profilage de charge de travail d'applications pour utilisation avec un système opérationnel (131), **caractérisé en ce que** ledit système opérationnel (131) présente un dispositif de système opérationnel (131) pour garder trace de l'utilisation de ressources de ladite ressource dans ledit système d'ordinateur (130) et réaliser un enregistrement de données (134) de ladite trace, comprenant :
- un programme (132) de saisie d'instantanés pour la capture de ladite donnée de trace d'utilisation pour tous lesdits processus fonctionnant durant une opération fonctionnelle dudit système d'ordinateur (130), tandis que ledit programme (132) de capture d'instantanés capture un premier fichier de capture d'instantanés qui inclut la donnée de trace d'utilisation dans une phase active pour tous les processus en cours lors d'utilisation d'un programme (132) pour être profilé en charge, et **caractérisé en ce que** ledit programme d'instantanés (132) capture également un second fichier de capture d'instantanés de donnée de trace d'utilisation pour des processus fonctionnant durant une phase active dudit système (130) d'ordinateur dans une condition différente, et **en ce qu'**il comporte :
- un mécanisme arithmétique pour la soustraction dudit second fichier de capture d'instantanés dudit premier fichier de capture d'instantanés.

14. Programme d'ordinateur selon la revendication 13, **caractérisé en ce que** ladite seconde condition est une condition de veille.

15. Programme d'ordinateur selon la revendication 13, **caractérisé en ce que** ladite première condition est également le fait de faire fonctionner le second programme d'applications (132) et ladite seconde condition est seulement le fait de faire fonctionner ledit second programme d'applications (132).

16. Programme d'ordinateur selon la revendication 13, **caractérisé en ce que** le programme d'ordinateur est stocké dans un milieu susceptible d'être lu par un ordinateur.

17. Procédé pour réaliser des profils de charge de travail de programme d'applications, comprenant :
- obtenir un enregistrement de donnée (134) d'une utilisation d'objets à partir d'un système opérationnel (131) pour garder trace d'utilisation de ressources par chacun des objets en utilisant ladite ressource dans ledit système d'ordinateur (130) et réaliser un enregistrement de données (134) de ladite trace, ladite étape d'obtention réalisant une saisie :
- d'un premier instantané de donnée d'utilisation pour tous lesdits objets fonctionnant lors d'une phase active fonctionnelle dudit système d'ordinateur (130), par ledit programme d'applications (132), et **caractérisé par** un second instantané de donnée d'utilisation pour tous lesdits objets fonctionnant durant une phase de fonctionnement en veille dudit système d'ordinateur (130), et :
- comparer ledit second instantané de phase de veille de ladite phase de veille, audit premier instantané de phase active de ladite phase active, pour révéler lequel desdits objets utilise ladite ressource tout en étant en ladite phase active.

18. Procédé selon la revendication 17, **caractérisé en ce que** ledit instantané de phase de veille et ledit instantané de phase active sont de durées égales.

19. Procédé selon la revendication 17, **caractérisé en ce que** lesdits objets révélés utilisant ladite ressource dans ladite phase active sont identifiés par des valeurs proportionnelles d'utilisation de ressources.

20. Procédé selon la revendication 19, **caractérisé en ce que** ladite valeur proportionnelle de ressource d'utilisation est utilisée pour établir un facteur de facturation.

21. Procédé selon la revendication 20, **caractérisé en ce que** ladite valeur proportionnelle d'utilisation de ressources par ledit programme d'applications est utilisé pour établir un profil de charge de travail de base pour ledit programme d'applications (132).

22. Procédé selon la revendication 21, **caractérisé en ce que** ledit profil de charge de travail de base est comparé à un profil de charge de travail contrôlé dans un système utilisé commercialement, pour déterminer si un changement apparait dans ledit profil.

23. Procédé selon la revendication 22, **caractérisé en ce que** si un changement apparaît dans ledit profil de charge de travail, un message est envoyé à une entité responsable dudit système d'ordinateurs (130).

24. Procédé selon la revendication 20, **caractérisé en ce que** ledit objet d'utilisation de ressources est du processus CPU.

25. Procédé d'utilisation selon la revendication 20, **caractérisé en ce que** ledit objet d'utilisation de ressources est le traitement I/O.

26. Procédé d'utilisation selon la revendication 20, **caractérisé en ce que** ledit objet d'utilisation de ressources est une pluralité d'objets, et les données de trace d'utilisation pour chacun de ladite pluralité sont identifiables.

27. Procédé selon la revendication 18, **caractérisé en ce que** ledit objet d'utilisation de ressource est tous les processus dont l'utilisation de ressource présente une trace par la fonction de système opérationnel (131).

28. Procédé selon la revendication 17 comprenant :
- un second programme d'applications (132) et un second instantané de données d'utilisation pour chacun desdits objets fonctionnant lors d'une phase active de fonctionnement dudit système d'ordinateur (130), par un second programme d'applications (132), et
- comparer ledit second instantané de phase active fonctionnelle, audit premier instantané de phase active fonctionnelle pour révéler lequel desdits objets utilise ladite ressource, tout en étant dans ladite phase active.
